# EUROPEAN PATENT SPECIFICATION

(11) **EP 2 110 053 B1**
(45) Date of publication and mention of the grant of the patent: **17.09.2014**
(21) Application number: 07866388.7
(22) Date of filing: 27.12.2007
(51) Int. Cl.: A47C 7/58

(54) **AUTOMATIC ROTATION SYSTEM FOR TILTING SEATS OF CHAIRS OR ARMCHAIRS**
AUTOMATISCHES ROTATIONSSYSTEM ZUM KIPPEN DER SITZFLÄCHEN VON STÜHLEN ODER SESSELN
SYSTÈME ROTATIF AUTOMATIQUE POUR ASSISES À BASCULE DE CHAISES OU DE FAUTEUILS

(30) Priority: 27.12.2006 ES 200603269
(43) Date of publication of application: 21.10.2009
(73) Proprietor: Figueras International Seating S.L., 08186 Llçá d'Amunt (Barcelona) (ES)
(72) Inventor: FIGUERAS MITJANS, José, 08186 Lliçá d'Amunt (Barcelona) (ES)
(74) Representative: Intès, Didier Gérard André
(86) International application number: PCT/ES2007/000763
(87) International publication number: WO 2008/077979

(56) References cited:
- GB-A- 224 687
- GB-A- 224 687
- GB-A- 235 586
- GB-A- 2 189 682
- US-A- 463 622
- US-A- 2 312 638
- US-A- 2 465 630
- US-A- 3 098 677
- US-A- 3 220 523
- US-A- 4 540 217
- US-A1- 2004 159 525

## Description

### Field of the Art

The present invention relates to the chairs or armchairs having a seat which can be tilted between a lowered use position and a raised folded position, proposing an automatic rotation system for tilting the mentioned seats, with a braking action preventing the blow of the seat when it is taken by the action of a spring to the folded position.

### State of the Art

There is furniture, in chair and armchair formats, the seat of which is arranged in a rotation assembly allowing the tilt between a lowered use position and a raised folded position, solutions being known in which said assembly of the tilting seats includes a spring acting in the direction of taking the seat to the raised folded position, thus determining an automatic actuation for raising the seat to said folded position when it is left free.

The known solutions of said automatic arrangement of action of the tilting seats towards the raised folded position include a torsion spring which is arranged tensed between respective parts which can rotate in relation to one another, of the rotating assembly of the seat.

This arrangement of the rotation of the seats with a tensed torsion spring has the drawback that the action of the spring is completely free and causes the tilting movement of the seat with acceleration in the rise, which gives rise to a blow occurring abruptly when the seat reaches the stop of the raised position, causing noise and, with the successive actuations there may be, for this reason, maladjustments of the actual structure of the chair or armchair in application.

Another know solution for tip-up chairs is disclosed in patent document GB 224687. To reduce this problem of the blow of the seats in the automatic tilt of the folding, the adjustment of the tension of the actuating spring is played with, it being complicated to perform said adjustment, and if the tension of the spring is reduced too much, the rise of the seat is slow and may not have the necessary effectiveness.

### Object of the Invention

According to the invention, an assembly of the rotation system for tilting seats based on a simple embodiment is proposed, whereby functional advantages allowing the tilt of the seats with complete effectiveness are achieved, but preventing the abrupt blow in the stop of the tilt of the rise.

This system of the invention is based on arranging the seat in the assembly by means of rotation holders formed by two complementary parts associated in a rotating play between same, with limiting stops in an angular path of the rotation, one of the parts being intended to be fixed on the side structure of the chair or armchair in application, whereas the other part determines an insertion to couple the tilting seat thereon in integral rotation.

According to the invention, between the two component parts of each rotation holder there is arranged a helicoidal spring which is incorporated in traction assembly, said spring being mounted on a conformation in the form of a drum of one of the parts of the holder, on which conformation the spring exerts an embracing action with a clamping effect.

An arrangement is thus obtained in which the traction spring exerts a rotation force between the two component parts of the holder, which causes the drive for the tilt for raising the seat in application, but such that at the same time said spring exerts a braking damping the action of the rotation as a result of the friction of its coils on the conformation in the form of a drum and due to the clamping effect exerted by the actual tension of the spring on said conformation.

The rotation of the seat towards the raised folded position thus begins with a quick start due to the tension of the traction spring, but as the rise occurs, the braking effect together with the decrease of the tension of the spring make the rising movement become gradually smoother, reaching the stop of the path of the rise such that there is no abrupt blow.

The system of the invention therefore has truly advantageous features, acquiring its own identity and a preferred character in the function of the automatic rotation for folding tilting seats for which it is intended.

### Description of the Drawings

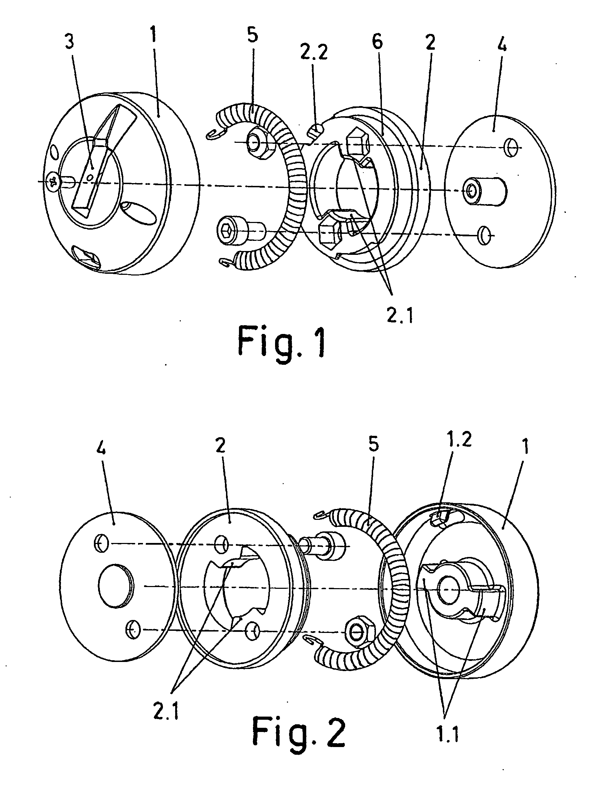

Figure 1 shows a perspective exploded view of an embodiment of a rotation holder for tilting seats according to the invention.
Figure 2 is a perspective exploded view of the same previous rotation holder from another angle of observation.

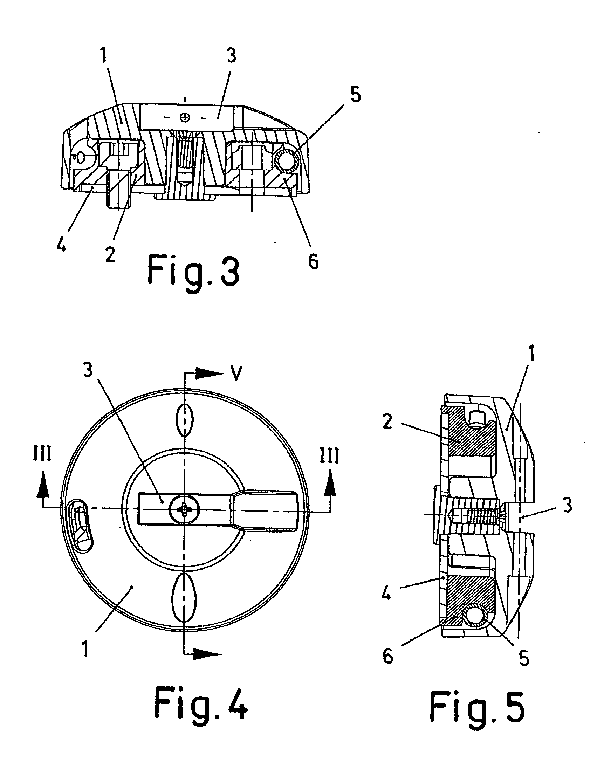

Figure 3 is a diametric section view of the holder according to the indication III-III shown in Figure 4.
Figure 4 is a front view of the rotation holder by the coupling part of the tilting seat.
Figure 5 is another diametric section view of the rotation holder according to the indication V-V shown in the same Figure 4.

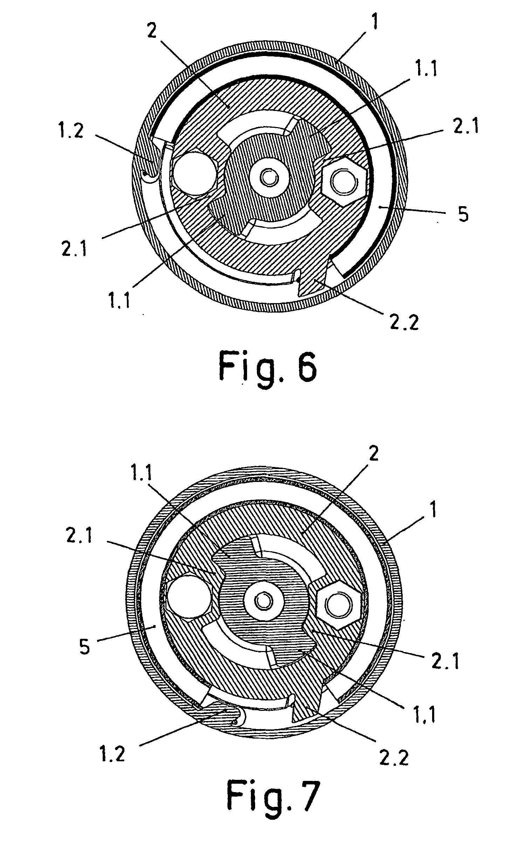

Figures 6 and 7 show a cross-section of the rotation holder in the two end positions of the angular path of the rotation.

### Detailed Description of the Invention

The object of the invention relates to a rotation system applicable to the assembly of the tilting seats of chairs or armchairs, with features improving the functional conditions of the tilt of said seats.

Said system is established with respect to a conventional arrangement, with the fastening of the seats in application by means of rotation holders formed by two complementary parts (1 and 2) which are coupled to one another with a relative rotation play between same.

According to a non-limiting embodiment, the component parts (1 and 2) of the holders can be made, for example, of fiberglass-reinforced polyamide, one of the parts (1) defining an insertion cavity (3) at the outer part for the coupling of the seat in application in an assembly of integral rotation with said part (1), whereas the other component part (2) of the holders is coupled to a plate (4), together with which it is fixedly fastened on the side structure of the chair or armchair in application.

The relative rotation play between the two component parts (1 and 2) of the holders is limited to a certain angle of freedom by means of limiting stops between conformations (1.1) of the component part (1) and conformations (2.1) of the component part (2), said stops coinciding with the rotation limits in the corresponding positions of the seats in application in the lowered use situation and in the raised folded situation.

According to the invention, a helicoidal type spring (5) is incorporated between the two component parts (1 and 2) of the mentioned holders of the rotating assembly of the seats, which spring is mounted on a conformation (6) in the form of an annular drum defined by one of the component parts of the holder, for example the part (2) which is fixed to the structure of the chair or armchair in application, said spring (5) being hooked by its ends with tension between respective conformations (1.2 and 2.2), in the form of lugs or pins, of the respective component parts (1 and 2) of the respective holder.

An arrangement is thus obtained in which the spring (5) has a clamping effect on the conformation (6) in the form of a drum on which it is supported, giving rise to a braking in the rotation movement between the two component parts (1 and 2) of the holder, which translates into a braking retention of the tilting movement of the seats in application, such that the rise thereof from the lowered use position when they are left free occurs with a quick initial start due to the action of the spring (5), and then the movement is gradually damped due to the braking effect, reaching the stop of the rise smoothly, preventing the abrupt blow in said stop.

The rising movement of the seats, in the mentioned conditions, is damped due to the braking effect caused by the spring (5) against the conformation (6) in the form of a drum on which it is supported, in combination with the progressive decrease of the tension of the spring (5) as the movement of the rising seat advances.

The braking effect caused by the spring (5) against the conformation (6) in the form of a drum on which it is supported occurs, if appropriate, due to the action of the tangential friction of the coils of the spring (5) on the surface of the mentioned support conformation (6), together with the clamping effect by the embracing pressure exerted by the spring (5) itself, due its tension, on the same support conformation (6).

In this sense, the surface of the mentioned conformation (6) in the form of a drum, on which the spring (5) is supported, can be provided with a finish making the friction of the spring (5) more intense to increase the braking effect.

In any case, with the same functional effect and without the concept being altered, the conformation (6) in the form of a drum for the support of the spring (5) in the assembly can be indistinctly defined in any of the two component parts (1 or 2) of the holder, and likewise, the arrangement of the rotation drive between the two parts (1 and 2) can be established with one or more springs (5) in the indicated assembly.

## Claims

1. An automatic rotation system for a tilting seat of a chair or an armchair, comprising holders for the fastening of the seat, each holder being formed by two component parts (1, 2) coupled with relative rotation play between them, and a helicoidal type spring (5) incorporated between the two component parts (1, 2), **characterized in that** the spring is hooked by its ends in traction assembly between respective conformations (1.2, 2.2) of the respective component parts (1, 2) of the holder, said spring (5) being mounted astride on a drum shaped conformation (6) in the form of an annular drum defined by one of the component parts (1, 2) of the holder.

2. The automatic rotation system of claim 1, wherein the spring (5) exerts an embracing pressure force on the drum shaped conformation (6) on which it is supported, determining a clamping effect which gives rise to a braking action in the relative rotation movement between the component parts (1, 2) of the holder.

3. The automatic rotation system of claim 1 or 2, wherein the coils of the spring (5) tangentially rub against the surface of the drum shaped conformation (6), exerting by friction a braking in the relative rotation movement between the two component parts (1, 2) of the holder.

4. The automatic rotation system of any one of claims 1 to 3, wherein one of the component parts (2) is adapted to be fixed on a side structure of a chair or armchair, whereas the other component part (1) defines an insertion cavity (3) to couple a tilting seat thereon in integral rotation.

5. The automatic rotation system of any one of claims 1 to 4, wherein the relative rotation play between the two component parts (1, 2) is limited to a certain angle of freedom by means of limiting stops between conformations (1.1) of one of the component parts (1) and conformations (1.1) of the other component part (2).

6. A chair or an armchair with a tilting seat, comprising the automatic rotation system of any one of claims 1 to 5.

## Patentansprüche

1. Automatisches Schwenksystem für einen kippbaren Sitz eines Stuhls oder Sessels, umfassend Halter zum Befestigen des Sitzes, wobei jeder Halter von zwei Bauteilen (1, 2) gebildet wird, die mit einem relativen Rotationsspiel zwischen einander miteinander verbunden sind, und eine Schraubenfeder (5), die zwischen den beiden Bauteilen (1, 2) eingebracht ist, **dadurch gekennzeichnet, dass** die Feder an ihren Enden in Spannanordnung zwischen entsprechenden Ausformungen (1.2, 2.2) der jeweiligen Bauteile (1, 2) des Halters eingehakt ist, wobei die Feder (5) außen auf einer trommelförmigen Ausformung (6) in Form einer ringförmigen Trommel, die durch eines der Bauteile (1, 2) des Halters definiert ist, angebracht ist.

2. Automatisches Schwenksystem nach Anspruch 1, wobei die Feder (5) eine umfassend angreifende Druckkraft auf die sie tragende trommelförmige Ausformung (6) ausübt, wodurch sie eine Klemmwirkung hervorruft, die eine Bremstätigkeit in der relativen Drehbewegung zwischen den Bauteilen (1, 2) und dem Halter auslöst.

3. Automatisches Schwenksystem nach Anspruch 1 oder 2, wobei die Windungen der Feder (5) tangential an der Oberfläche der trommelförmigen Ausformung (6) reiben und damit durch Reibung ein Abbremsen der relativen Drehbewegung zwischen den beiden Bauteilen (1, 2) des Halters auslösen.

4. Automatisches Schwenksystem nach einem der Ansprüche 1 bis 3, wobei eines der Bauteile (2) dazu ausgelegt ist, an einer Seitenstruktur eines Stuhls oder Sessels befestigt zu sein, während das andere Bauteil (1) eine Einsatzausnehmung (3) definiert, um darauf einen kippbaren Sitz in integraler Rotation anzubringen.

5. Automatisches Schwenksystem nach einem der Ansprüche 1 bis 4, wobei das relative Rotationsspiel zwischen den beiden Bauteilen (1, 2) auf einen bestimmten Freiheitsgrad begrenzt ist, indem Haltepunkte zwischen den Ausformungen (1.1) eines der Bauteile (1) und Ausformungen (1.1) des anderen Bauteils (2) begrenzt werden.

6. Stuhl oder Sessel mit einem kippbaren Sitz, umfassend das automatische Schwenksystem nach einem der Ansprüche 1 bis 5.

## Revendications

1. Système de rotation automatique pour un assise inclinable d'une chaise ou d'un fauteuil, comportant des supports pour la fixation de l'assise, chaque support étant formé par deux parties constitutives (1, 2) reliées avec un jeu de rotation relative entre elles, et un ressort de type hélicoïdal (5) incorporé entre les deux parties constitutives (1, 2), **caractérisé en ce que** le ressort est accroché par ses extrémités dans un ensemble de traction entre des conformations respectives (1.2, 2.2) des parties constitutives respectives (1, 2) du support, ledit ressort (5) étant monté à cheval sur une conformation en forme de tambour (6) sous la forme d'un tambour annulaire défini par une des parties constitutives (1, 2) du support.

2. Système de rotation automatique selon la revendication 1, dans lequel le ressort (5) exerce une force de pression de serrage sur la conformation en forme de tambour (6) sur laquelle il est supportée, en déterminant un effet de serrage qui provoque une action de freinage dans le mouvement de rotation relative entre les parties constitutives (1, 2) du support.

3. Système de rotation automatique selon la revendication 1 ou 2, dans lequel les spires du ressort (5) frottent de manière tangentielle contre la surface de la conformation en forme de tambour (6), en exerçant par friction un freinage dans le mouvement de rotation relative entre les deux parties constitutives (1, 2) du support.

4. Système de rotation automatique selon l'une quelconque des revendications 1 à 3, dans lequel une des parties constitutives (2) est prévue pour être fixée sur une structure latérale d'une chaise ou d'un fauteuil, alors que l'autre partie constitutive (1) définit une cavité d'insertion (3) afin de relier une assise inclinable dans un rotation d'un seul tenant.

5. Système de rotation automatique selon l'une quelconque des revendications 1 à 4, dans lequel le jeu de rotation relative entre les deux parties constitutives (1, 2) est limité à un certain angle de liberté au moyen de butées de limitation entre des conformations (1.1) d'une des parties constitutives (1) et des conformations (1.1) de l'autre partie constitutive (2).

6. Chaise ou fauteuil avec une assise inclinable, comportant le système de rotation automatique selon l'une quelconque des revendications 1 à 5.
